# EUROPEAN PATENT APPLICATION

(11) **EP 4 166 247 A1**
(43) Date of publication of application: **19.04.2023**
(21) Application number: 21315197.0
(22) Date of filing: 12.10.2021
(51) Int. Cl.: B08B 3/00, B01L 5/04, C12M 1/00, B01D 53/75

(54) **INDUSTRIAL WASHER WITH EXHAUST SYSTEM**

(71) Applicant: Getinge Lancer SAS, 31170 Tournefeuille (FR)
(72) Inventor: Tremolieres, Cédric, Tournefeuille (FR); Duprat, Jean-Michel, Tournefeuille (FR); Guillaud, Nicolas, Tournefeuille (FR)
(74) Representative: Zacco GmbH

(57) **Abstract**

An exhaust system for an industrial washer is proposed. The exhaust system comprises a conduit (101) that can be coupled to an exhaust air outlet (24) of a washer (1). A condenser (107) is coupled to the conduit (101) and configured to cool and to extract humidity from the exhaust air. A filter housing (103) with removable filter is connected to the condenser (107) and configured to filter said exhaust air. A fan (102) with an exhaust outlet is connected to the filter housing (103). A controller (30) is configured to control at least the fan (102) to extract the exhaust air from the washer outlet (24) through the conduit, condenser and filter housing and to eject dried and cooled exhaust air from said exhaust outlet (1021). By reducing the humidity and temperature of the exhaust air, the condenser improves the efficacy and lifetime of the filter. The effective and reliable removal of contamination is thus ensured while the need to further process the waste air is obviated.

## Description

### Technical Field

The present disclosure concerns an exhaust arrangement for industrial washers, and particularly to industrial washers for use in pharmaceutical and biotech fields.

### Background

Industrial washers are employed in laboratories, hospitals and the pharmaceutical and biotech industries for cleaning equipment parts and components, such as glassware, vessels, filling lines and the like, used for diagnostic purposes and bio-pharmaceutical and pharmaceutical production and quality control. These washers, also called washer/dryers, may be used as a stand-alone device or as part of an integrated cleaning and sterilization system. Industrial washers of this kind have a chamber equipped with spray nozzles, typically on rotating arms, into which the equipment and components are installed for cleaning. The washer typically has one or more wash cycles during which heated water and/or a cleaning, disinfecting, sanitizing or other agent is sprayed into the interior of the chamber. This may be followed by one or more rinse cycles as appropriate and the process terminates with a drying cycle during which hot air is blown into the chamber. Exhaust air is ejected via an outlet or chimney.

Many of the components used in the biotech and pharmaceutical laboratories or production sites will have residues of potentially dangerous substances including APIs (active pharmaceutical ingredients) and it is thus desirable to remove such substances from waste produced during cleaning. This applies also to the air expelled during the washing, rinsing and more particularly the drying cycles of the washer. Generally, the expelled air is filtered with a fine particulate filter, such as a HEPA (high-efficiency particulate absorbing) filter. A problem when using such filters on an industrial washer is that the expelled air is generally of a high temperature and humidity. The high temperature risks damaging the filter, while the high humidity leads to clogging. Both severely limit the lifetime of the filter, so requiring frequent replacement, while the filtered air may need additional processing to ensure that all contaminants are safely and reliably removed.

### Summary

It is an object of the present disclosure to propose a means of mitigating the problems associated with known arrangements.

This and other objects are achieved in an exhaust system for a washer and a washer comprising an exhaust system as set out in the accompanying claims.

In accordance with some embodiments, there is proposed an exhaust system for a washer, such as an industrial washer for use in pharmaceutical or biotech production, laboratory diagnostic testing or similar, the exhaust system defining an exhaust path for extracting exhaust air from an outlet of a washer, the exhaust path comprising: a first conduit adapted for coupling to an outlet of a washer, a condenser coupled to the first conduit and configured to cool and extract humidity from the exhaust air, at least one filter housing connected to the condenser and adapted to accommodate at least one removable filter configured to filter the exhaust air, at least one fan connected to the filter housing and configured to draw exhaust air through the first conduit, the condenser and the filter housing, an exhaust outlet connected to the fan for receiving exhaust air ejected by the fan, and a controller configured to control at least the fan to extract exhaust air from a washer outlet and to eject dried and cooled air from the exhaust outlet.

By providing a condenser upstream of a filter in the exhaust system the temperature and humidity of the exhaust air can be significantly reduced so improving the efficacy and lifetime of the filter and ensuring the effective and reliable removal of contamination, such as active pharmaceutical ingredients and so obviating the need. to further process the waste air. In addition, the processed exhaust air may be ejected into the space around the washer without significantly increasing the temperature or humidity of the surrounding air, which can render the working environment unpleasant.

The humidity of the exhaust air is still further reduced when the exhaust system comprises an air inlet communicatively coupling a source of hot air to the conduit upstream of the condenser for selectively introducing hot air into the exhaust path at the condenser under control of the controller. By the term "hot air" is meant air that is of an elevated temperature relative to the exhaust air at the point of injection and thus capable of heating the exhaust air as well as adding to the volume of air in the conduit. The temperature of the injected heating air is preferably in the range of 70°C to 95°C, more preferably in the range of 75°C to 85°C at the air inlet.

Preferably, the air inlet is connected to a drying air supply of the washer. This renders the system more compact and efficient, by using an already existing supply of clean, i.e. filtered, heated air available from the washer.

In some embodiments the condenser comprises a coolant supply line and outlet line, the controller being adapted to monitor and/or control the flow of coolant through the condenser via the supply and outlet lines. By allowing the controller to monitor the supply of coolant to the condenser, the controller can control the temperature and humidity of the exhaust air, for example by modifying the fan speed or coolant flow. Preferably, a temperature sensor is provided for monitoring the temperature of coolant in the coolant outlet line and communicating a signal indicative of the monitored temperature to the controller.

In some embodiments the filter is a HEPA filter and the filter housing is configured to accommodate the filter in a BIBO arrangement. The BIBO (Bag-In-Bag-Out) arrangement allows operating personnel to remove and dispose of a used filter without needing to handle the filter and hence without risk of contamination. The filter housing may further comprise a sensor for monitoring the condition of the filter. Such a sensor typically monitors clogging, or how well the filter passes air, and may measure the differential pressure across the filter.

In preferred embodiments the exhaust system comprises a droplet barrier arranged between the condenser and the filter housing, the droplet barrier being configured to accommodate at least one removable droplet filter. A droplet barrier provides additional protection for the filter as it catches any drops that may be entrained by the air flow from the condenser. As for the HEPA filter, the droplet barrier is preferably configured to accommodate the droplet filter in a BIBO arrangement to allow removal of soiled droplet filters without danger of contamination to operating personnel.

In some embodiments the exhaust system comprises a cleaning supply line configured to supply cleaning fluid to at least one nozzle arranged in the exhaust path, wherein the controller is configured to control the supply of cleaning fluid to the cleaning supply line. The nozzles are preferably arranged in at least one of the exhaust conduit, the condenser and the droplet barrier to ensure effective cleaning of the exhaust path. Preferably, the nozzles are ball nozzles adapted to spray cleaning fluid in a substantially spherical pattern.

In some embodiments, a frame is provided for supporting the exhaust system, the frame being adapted to be mounted on a washer. In this way, the exhaust system can be retrofitted to different types of washer without extensive modification.

The present disclosure further proposes a washer, such as an industrial washer for use in pharmaceutical or biotech manufacturing, laboratory or diagnostic testing or similar, the washer comprising an exhaust system as cited above and described herein.

In accordance with a further aspect, there is proposed a method for processing exhaust air from a washer, such as an industrial washer for use in pharmaceutical or biotech production, laboratory diagnostic testing or similar. The method includes the steps of:
drawing exhaust air out of the outlet of a washer exhaust system using at least one fan;
passing said exhaust air through at least one filter for removing particles from said exhaust air prior to arriving at said fan;
passing said exhaust air through a condenser prior to said at least one filter;
controlling at least one of said fan and said condenser to remove moisture and heat from said exhaust air prior to the air arriving at said filter.

In some embodiments, the efficiency of the condenser can be increased by selectively introducing hot air into said exhaust air upstream of said condenser. Preferably, the hot air is introduced into the exhaust air under the control of the controller at least during one of a washing, rinsing and draining cycle of the washer.

### Brief description of drawings

The present disclosure will be better understood and further advantages will become apparent from the detailed description of a preferred embodiment that is presented by way of example only with reference to the following drawings in which:
- Fig. 1: schematically depicts a washer with an exhaust system;
- Fig. 2: depicts a schematic and perspective view of the exhaust system of Fig. 1;
- Fig. 3: depicts a schematic and perspective view of the exhaust system from the opposite side of that shown in Fig. 2.

### Detailed description

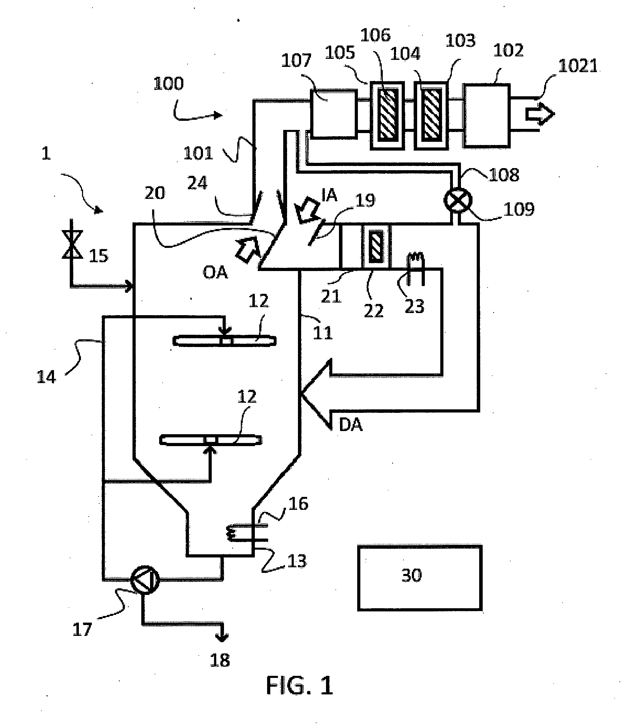

Fig. 1 shows a washer 1 with an exhaust system 10 according to the present disclosure. The washer 1 may be used as stand-alone item or be part of a cleaning and sterilisation system for washing equipment, glassware and various parts used in biotech or bio-pharmaceutical, API (Active Pharmaceutical Ingredient) or bulk chemical manufacturing, quality control, laboratories or diagnostics. ' The washer 1 comprises a washing chamber 11 into which the equipment or parts to be cleaned can be introduced, either directly or on racks. Access to the washing chamber 11 is provided by one or more doors (not shown) which may include a transparent window of glass or other suitable material.

Liquid, such as water, possibly with an added cleaning or rinsing agent, can be introduced into the chamber 11 via a supply pipe 15. Additional non-shown supply pipes may be provided for the separate supply of washing liquid, disinfecting agent, rinsing liquid or cleaning additive, for example. The water may be tap water, treated water, i.e. softened, de-ionized, filtered or similar, or sterilized water. The water or other liquid supplied by supply pipe 15 may be heated. At the base of the chamber 11 is a sump 16 in which the liquid collects and is then re-circulated into the chamber 11 via a pump 17, re-circulation pipes 14 and two rotatable spray arms 12. Further stationary or movable spray nozzles (not shown) may be provided in addition or instead of one or both of the spray arms 12. A heater 16 may be provided in the sump 13 to heat the liquid before re-circulation. The temperature of the liquid may be selected according to the cleaning agents used and the type of soiling but is typically in the range of 30°C to 95°C with rinsing liquid preferably heated to the range of 85°C to 95°C. The pump 17 is also connected to a drain via a three-way valve to drain the liquid from the chamber 11 to a collecting vessel from where it can be processed further or to an evacuation outlet. At the top of the chamber 11 is arranged an outlet or chimney 24 for extracting exhaust air and vapour as illustrated by the arrow marked EA.

The washer 1 is further provided with a drying air supply. Input air is drawn into the air supply via one or more air inlets 19 by a fan 21 as illustrated by the arrow IA. In some embodiments a heat exchanger 20 may be arranged between the fan 21 and the air inlets to allow the inlet air to be pre-heated by the spent air of the chamber 11. A filter 22 may be arranged before or after the fan 21 to filter the air. Finally a heater 23 is provided to heat the drying air to the desired temperature, which is preferably between 90°C and 115°C and most preferably between 100°c and 110°C. The heated air is injected into the chamber via suitable air inlets during a drying cycle as illustrated by the arrow marked DA.

The various elements of the washer 1 are controlled by a controller 30 illustrated schematically in Fig. 1. More specifically, the controller controls the supply of liquid, the heating of the liquid and the draining of the liquid to the chamber by controlling the liquid supply, 15, pump 17 and heater 16. The controller 30 also controls the elements of the drying air supply to initiate and control the supply and temperature of air. The controller 30 furthermore receives signals from various sensors (not shown) arranged and configured to monitor various parameters such as temperature and flow in the conventional manner. The controller 30 may be provided with a control panel (not shown) via which an operator may set parameters and view displayed program and system information.

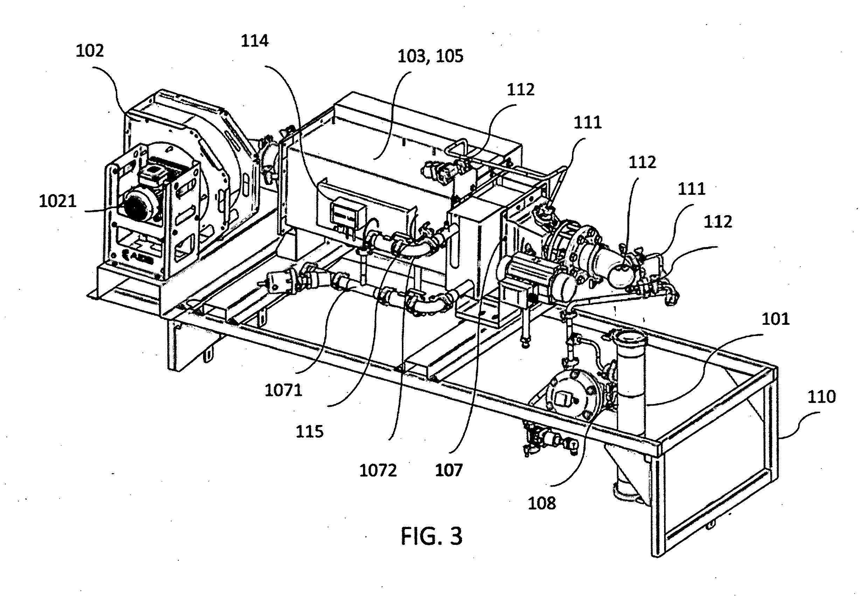

Mounted on the washer 1 is an exhaust system 100. The exhaust system 100 is configured to extract spent air and vapour from the washer chamber, filter the air to remove contaminants, including APIs (Active Pharmaceutical Agents) if present, and eject the air into the surrounding room, or into an air vent, if provided. To this end, the exhaust system 100 comprises an exhaust conduit that can be coupled in a sealed manner to the chimney of the washer 1. The exhaust conduit 101 defines an exhaust path that includes a fan 102 for drawing air out of the washer chamber 11 and ejecting air via an exhaust outlet 1021 into the surrounding space or an air vent or similar evacuation system. Directly upstream of the fan 102 is arranged a filter housing 103 for housing a removable filter, preferably a HEPA (high-efficiency particulate absorbing) filter 104. A drip trap or droplet barrier 105 may also be provided upstream of the filter housing 103. The droplet barrier 105 includes a removable droplet filter 106 configured to remove liquid droplets from the air before it passes through the filter 104. Between the filter housing 103 or the droplet barrier 105, if present, and the chimney 24 there is provided a condenser 107. The condenser 107 is supplied with a cooling liquid via a coolant inlet line 1071 and a coolant outlet line 1072 (see Fig. 3). In the illustrated example, the coolant is water, chilled to a temperature of around 5°C to 10°C, more preferably around 7°C. An outlet (not shown) is provided for draining liquid that collects in the condenser 107 and the droplet barrier 105.

While the condenser 107 shown in the example embodiment is water-cooled, it will be understood that other condenser types could be used. For example, the condenser could be air-cooled or evaporative.

The filter 104 removes contaminants from the exhaust air EA and in particular APIs so that the air can be released into the space surrounding the washer without danger to operating personnel. The exhaust air EA extracted from the washer chamber 11 has a high temperature and high humidity. When exposed to this air directly, the filter 104 may be damaged by the high temperatures and risks becoming clogged with liquid, both of which will impair the efficacy of the filter 104 and severely reduce its lifetime. The condenser 107 serves the dual purpose of cooling the exhaust air EA extracted from the washer chamber 11 and also reducing the humidity of that air. This protects the filter 104 from damage and clogging and extends its lifetime. The filter 104 is further protected from clogging with liquid by the droplet barrier 105, which removes remaining droplets of liquid from the air that may be swept along by the flow of air through the condenser 107 during the washing, rinsing, draining and drying cycles of the washer or during cleaning of the exhaust system 100 using a cleaning supply line 111 that is described further below.

The controller 30 also controls the operation of the exhaust system, in particular by controlling the operation and speed of the fan 102 and possibly also the coolant supply to the condenser to extract the exhaust air EA from the washer chamber 11 and eject cooled, dehumidified and purified air via the exhaust outlet 1021 into the surroundings.

In order to reduce the relative humidity of the air arriving at the condenser 107, the temperature of the exhaust air EA and vapour entering the condenser 107 can be raised by mixing it with heated air injected into the exhaust conduit 101 upstream of the condenser 107 via one or more an air conduits 108. As shown in Fig. 1 this air conduit may extract heated air from the drying air supply downstream of the heater 23. A valve 109 controlled by controller 30 regulates the flow of heated air. Alternatively, heated air may be supplied from an external source.

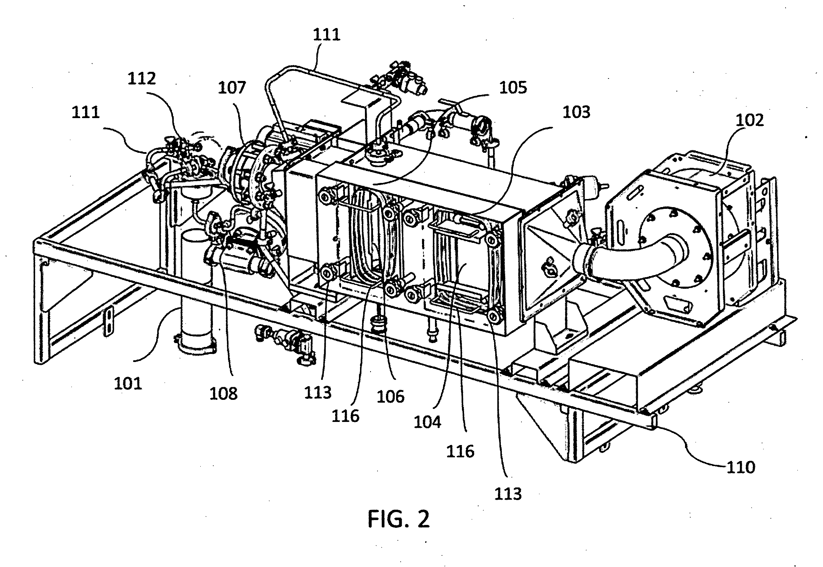

Turning now to the remaining figures, Fig. 2 shows a detailed perspective view of the exhaust system shown in Fig. 1 from the front, while Fig. 3 shows a perspective view of the same exhaust system from the rear. The same reference numeral are used for the same elements throughout.

As shown in Figs. 2 and 3, the exhaust system 100 is arranged on a frame 110 which is designed to fix the exhaust system 100 over or adjacent to a conventional washer 1 with the exhaust conduit 101 aligned with the chimney 24 or an exhaust air.outlet, if no chimney 24 is present. It will be understood that the exhaust system 100 shown in the figures may be used to retrofit many different types of washer 1.

The filter housing 103 and droplet barrier 105 are provided with removable cover plates (not shown) that can be locked into place by screw locks 113. In Fig. 2, both the filter housing 103 and droplet barrier 105 are shown open, i.e. without a respective plate. The filter housing 103 and droplet barrier 105 are preferably arranged to permit a filter 104 and droplet barrier filter 106 to be removed and replaced without an operator coming into contact with the filters 104, 106 and any contamination thereon. To this end, the filter housing 103 and droplet barrier 105 are provided with seal rings 116 around which a bag can be fitted and held in place by an elastic ring. The bag may be of plastic suitable for disposing of contaminated or hazardous material. When changing the filter 104 or the droplet filter 106, an operator can grasp the respective filter through the bag and remove it into the bag at the same time as detaching the bag from the seal ring 116. This arrangement is well known and is commonly referred to as a Bag-In-Bag-Out or BIBO arrangement.

To ensure that the exhaust system 100 safely and effectively removes all contamination from the exhaust air when in operation, it may be cleaned periodically. This is achieved by applying cleaning and/or rinsing fluid over all surfaces upstream of the filter housing 103. The cleaning fluid may be water, a mixture of water and cleaning agent, organic solvents, acid or base detergents, organic or inorganic complexing agents, dispersants, surfactants, wetting agents, sanitizers, pressurized water vapour or superheated water vapour. To this end a cleaning fluid supply line is provided, which, as shown in Figs. 2 and 3 branches out into several smaller lines 111 terminating in nozzles 112. The nozzles may be ball nozzles as illustrated in Figs. 2 and 3 that are configured to spray the cleaning fluid in a substantially spherical pattern. Two ball nozzles 112 are visible in the cutaway view of the exhaust conduit 101 illustrated in Figs. 2 and 3, but further ball nozzles are located at other locations in the exhaust conduit 101 as well as in the condenser and the droplet barrier 105. The ball nozzles 112 ensure that cleaning liquid is dispersed over all surfaces. The controller 30 controls the cleaning of the exhaust system 101. Waste cleaning and rinsing liquid drains into the washer.chamber 11 or is drained via the condenser or droplet barrier drain. Waste cleaning fluid may be collected in a dedicated tank for subsequent processing if the product removed is hazardous. Otherwise it can be disposed of in the normal way. Heated air can be applied to the exhaust conduit 101 via inlet 108 to dry the conduit and the exhaust path after cleaning. The droplet barrier 104,105 prevents cleaning fluid reaching the filter 105, 106.

The exhaust system 100 further includes a number of sensors that are connected to the controller 30 for monitoring operation. The condition of the filter 104 is monitored by a sensor 114 that measures the differential pressure across the filter 104 and thus determines the extent of clogging. A temperature sensor 115 is present in the coolant outlet line 1072 for monitoring the temperature of the coolant and thus the correct functioning of the condenser. A further temperature sensor may be provided in the inlet line 1071 to monitor and control the operation of the condenser and the coolant flow. Further sensors (not shown) may be present to monitor and control the operation of the exhaust system. For example conductivity or other sensors may be arranged to measure the conductivity of the used cleaning liquid to monitor the efficacy of the cleaning function. A temperature sensor in the exhaust path downstream of the condenser 107 could be used to monitor and control the cooling function of this element. These sensors 114, 115 send signals indicative of the measured parameter to the controller 30, which uses these values as control values to control the processes. The controller 30 may also issue alerts to operating personnel when measured values exceed certain limits. Alerts may be issued as audible or visible alarms or as messages displayed on a display panel.

The condenser 107 illustrated in the figures is substantially tubular, however, it will be understood that alternative shapes could be employed. For example, the condenser could be flat or multi-chambered.

The washer 1 may be operated to perform a washing phase, a rinsing phase, one or more draining phases and a drying phase under the control of the controller 30. During the washing, rinsing and draining phases, air and vapour is extracted via the chimney 101 by the exhaust system 100 under the action of the fan 102. In order to reduce the relative humidity of the exhaust air, the controller may control the drying air supply, consisting of consisting of the fan 21, filter 22 and heater 23, together with valve 109 to inject hot air into the exhaust conduit 101 via the inlet line 108. The drying air DA may not be fed to the chamber during these cycles. During the drying phase, the controller 30 controls the drying air supply consisting of the fan 21, filter 22 and heater 23 to blow hot, drying air, DA, into the chamber 11 from where it is evacuated via the chimney 24 into the exhaust system 100. During this latter phase the controller controls the fan 102 of the exhaust system to operate at a higher speed than during the washing, rinsing and draining phases. This speed may be set at the same speed as the fan 21 in the drying air supply. During the washing and rinsing liquids are heated to between 70°C and 95°C, and preferably between 80°C and 95°C. During drying, the air may be heated to 90°C to 110°C. The controller also controls the cleaning of the exhaust system 100 when the washer is not in operation.

The function of the exhaust system 1 is essentially as follows. Under the control of controller 30, the fan 102 draws exhaust air EA out of the washer outlet 24. The exhaust air first passes through the condenser 107, where it is cooled and dried as humidity in the air is condensed out. The air then passes through a droplet filter 103, if present, in which any remaining liquid droplets are caught and removed from the air. Subsequently, the cooled, dried air passes through filter 104 to remove contaminants, such as airborne particles. The cooled, dried and cleaned air is then ejected from the fan. This air does not need to be collected by an air extraction system but can be ejected directly into the space around the washer 1 without significantly increasing the temperature or humidity of the surrounding air. The efficiency of the condenser 107 can be increased by selectively injecting hot air into the exhaust air upstream of the condenser.

This disclosure includes an exhaust system for a washer, such as an industrial washer as well as a washer including an exhaust system.

The examples in this disclosure are non-limiting preferred embodiments only. The various features disclosed are contemplated for use in any reasonable sub-combination.

### List of reference numbers

- 1: Washer
- 11: Chamber
- 12: Spray arm
- 13: Sump
- 14: Re-circulation pipe
- 15: Supply pipe
- 16: Heater
- 17: Pump
- 18: Drain
- 19: Air inlet
- 20: Heat exchanger
- 21: Fan
- 22: Filter
- 23: Heater
- 24: Chimney
- 30: Controller
- 100: Exhaust system
- 101: Exhaust conduit
- 102: Fan
- 1021: Exhaust outlet
- 103: Filter housing
- 104: Filter
- 105: Droplet barrier
- 106: Droplet filter
- 107: Condenser
- 1071: Coolant inlet line
- 1072: Coolant outlet line
- 108: Air inlet
- 109: Valve
- 110: Frame
- 111: Cleaning supply line
- 112: Ball nozzle
- 113: Screw lock
- 114: Sensor
- 115: Sensor
- 116: Seal ring

## Claims

1. An exhaust system for a washer, such as an industrial washer for use in pharmaceutical or biotech production, laboratory diagnostic testing or similar, the exhaust system (100) defining an exhaust path for extracting exhaust air from an outlet of a washer, said exhaust path comprising:
a first conduit (101) adapted for coupling to an outlet (24) of a washer (1),
a condenser (107) coupled to the first conduit (101) and configured to cool and to extract humidity from said exhaust air,
at least one filter housing (103) connected to the condenser (107) and adapted to accommodate at least one removable filter (104) configured to filter said exhaust air,
at least one fan (102) connected to said filter housing (103) and configured to draw said exhaust air through said first conduit (101), said condenser (107) and said filter housing (103),
an exhaust outlet (1021) connected to said fan (102) for receiving exhaust air ejected by said fan, and
a controller (30) configured to control at least said fan (102) to extract said exhaust air from said washer outlet (24) and to eject dried and cooled exhaust air from said exhaust outlet (1021).

2. An exhaust system as claimed in claim 1, further comprising at least one air inlet (108) communicatively coupling a source of hot air to said conduit (101) upstream of said condenser (107) for selectively introducing hot air into said exhaust path at said condenser (107) under control of said controller (30).

3. An exhaust system as claimed in claim 2, wherein said air inlet (108) is connected to a drying air supply of said washer (1).

4. An exhaust system as claimed in claim 2 or 3, wherein said hot air has a temperature in the range of 70°C to 90°C, more preferably in the range of 75°C to 85°C at said air inlet.

5. An exhaust system as claimed in any previous claim, wherein said condenser (107) comprises a coolant supply line (1071) and outlet line (1072), the controller (30) being adapted to monitor and/or control the flow of coolant through said condenser via said supply and outlet lines.

6. An exhaust system as claimed in claim 5, further comprising a temperature sensor (115) adapted to monitor the temperature of coolant in said coolant outlet line (1071) and communicate a signal indicative of the monitored temperature to said controller (30).

7. An exhaust system as claimed in any previous claim, wherein said filter (104) is a HEPA filter and said filter housing is configured to accommodate said filter in a BIBO arrangement.

8. An exhaust system as claimed in any previous claim, wherein said filter housing (103) further comprises a sensor (114) for monitoring the condition of said filter.

9. An exhaust system as claimed in any previous claim, further comprising a droplet barrier (105) arranged between said condenser (107) and said filter housing, said droplet barrier preferably including at least one removable droplet filter (106), said droplet barrier (105) preferably being configured to accommodate said at least one droplet filter (106) in a BIBO arrangement.

10. An exhaust system as claimed in any previous claim, further comprising a cleaning supply line (111) configured to supply cleaning fluid to at least one nozzle (112) arranged in the exhaust path, wherein said controller (30) is configured to control the supply of cleaning fluid to said cleaning supply line (111).

11. An exhaust system as claimed in claim 10, wherein said nozzles (112) are arranged in at least one of the exhaust conduit (101), the condenser (107) and the droplet barrier (105), said at least one nozzle (112) preferably being a ball nozzle adapted to spray cleaning fluid in a substantially spherical pattern.

12. An exhaust system as claimed in any previous claim, further comprising a frame (110) supporting the exhaust system, the frame being adapted to be mounted on a washer (1).

13. A washer, such as an industrial washer for use in pharmaceutical or biotech manufacturing, laboratory diagnostic testing or similar, the washer comprising an exhaust system as claimed in any previous claim.

14. A method for processing exhaust air from a washer, such as an industrial washer for use in pharmaceutical or biotech production, laboratory diagnostic testing or similar, the method including the steps of:
drawing exhaust air out of the outlet of a washer exhaust system using at least one fan;
passing said exhaust air through at least one filter for removing particles from said exhaust air prior to arriving at said fan;
passing said exhaust air through a condenser prior to said at least one filter;
controlling at least one of said fan and said condenser to remove moisture and heat from said exhaust air prior to the air arriving at said filter.

15. A method as claimed in claim 16, further comprising the step of selectively introducing hot air into said exhaust air upstream of said condenser.
